# EUROPEAN PATENT SPECIFICATION

(11) **EP 1 429 576 B1**
(45) Date of publication and mention of the grant of the patent: **01.03.2006**
(21) Application number: 03256392.6
(22) Date of filing: 10.10.2003
(51) Int. Cl.: H04Q 7/38

(54) **System and method for providing location-based services to users**
System und Verfahren zum Bereitstellen von ortsabhängigen Diensten für Verbraucher
Système et procédé pour fournir aux utilisateurs des services dépendants de l'emplacement

(30) Priority: 18.11.2002 US 298382
(43) Date of publication of application: 16.06.2004
(73) Proprietor: Hewlett-Packard Development Company, L.P., Houston, Texas 77070 (US)
(72) Inventor: Jollis, Roger, Fort Collins, CO 80524-9671 (US)
(74) Representative: Jehan, Robert

(56) References cited:
- WO-A-00/04730
- WO-A-02/082832
- US-A1- 2002 016 173
- US-A1- 2002 019 702
- US-A1- 2002 128 019

## Description

The present invention relates to a method of and system for providing location based services.

Numerous enhanced services can be provided to a user once a service provider has knowledge of the location of the user. For example, a service provider that offers movie tickets can provide a user with information regarding movies playing in a general vicinity of the user. Typically, the information is displayed to the user via a mobile appliance, such as a personal digital assistant (PDA) or cell phone, for example.

Both network-resident technologies and handset-resident technologies have been used to provide information corresponding to the location of a user. Network-resident technologies, *e.g.*, triangulation, time of arrival difference, angle of arrival and RF fingerprinting, offer accurate location determination. However, network-resident technologies typically require the use of additional equipment, *e.g.*, hardware and/or software, associated with the network. Because this equipment can be expensive, network carriers may be reluctant to enhance their respective networks to provide this functionality. Additionally, if a network carrier incurs the expense of adding such equipment, the network carrier may be reluctant to allow access to user location information by location-based service providers without charging an excessive fee.

In contrast, handset-resident technologies require the use of hardware and/or software installed in the mobile appliance operated by the user. Such handset-resident technologies can be implemented by providing a user with the ability to enter location information manually, such as by entering an address. GPS receivers also have been used but can significantly increase the cost, size and/or complexity of the mobile appliances.

US 2002/0016173 discloses a method of providing location-based services to a user comprising the steps of acquiring information corresponding to antenna locations associated with a user using the information acquired to approximate a future location of the user and providing information to the user based upon the estimated user trajectory.

WO-00/04730 discloses a method of providing location-based services to a user based on both the user location and known user preferences.

US -2002/0019702 discloses a system and method for determining a location. The system employs encoded information devices dispersed through the environment, each having a non-unique code associated therewith. The codes from the encoded information devices are acquired as a reading device passes nearby, and stored. The codes from a proximate set of information devices are correlated with a map or mapping relation to determine one or more consistent positions within the environment.

The present invention seeks to provide improved user services.

According to an aspect of the present invention there is provided a method of providing location-based services as specified in claim 1.

According to another aspect of the present invention there is provided a system for providing location based services as specified in claim 8.

Systems and methods described here involve approximating locations of users. In this regard, an embodiment of a system is provided which includes a locating system that is operative to acquire information corresponding to antenna locations associated with a user. The locating system also is operative to use the information acquired to approximate a future location of the user.

Another embodiment of a system includes a location-based service system that is operative to provide information to a user based upon an approximated future location of the user. The approximated future location is determined by analyzing information corresponding to antenna locations associated with the user.

An embodiment of a method includes acquiring information corresponding to antenna locations associated with a user and using the information acquired to approximate a future location of the user.

Another embodiment of a method includes providing information to a user based upon an approximated future location of the user, the approximated future location being determined by analyzing information corresponding to antenna locations associated with the user.

An embodiment of a computer-readable medium includes logic configured to acquire information corresponding to antenna locations associated with a user, and logic configured to use the information acquired to approximate a future location of the user.

Another embodiment of a computer-readable medium includes logic configured to provide information to a user based upon an approximated future location of the user, the approximated future location being determined by analyzing information corresponding to antenna locations associated with the user.

Embodiments of the present invention are described below, by way of example only, with reference to the accompanying drawings, in which:
FIG. 1 is a schematic diagram depicting an embodiment of a system.
FIG. 2 is a flowchart depicting functionality of the system of FIG. 1.
FIG. 3 is a schematic diagram depicting a computer or processor-based device that can be used to implement an embodiment of a locating system.
FIG. 4 is a flowchart depicting functionality of an embodiment of a locating system.
FIG. 5 is a flowchart depicting functionality of another embodiment of a locating system.
FIG. 6 is a schematic diagram depicting a user and an intended path of travel relative to multiple communication network antennas.
FIG. 7 is a schematic diagram depicting the user and communication network antennas of FIG. 6, showing the user in a first position.
FIG. 8 is a schematic diagram depicting the user and communication network antennas of FIGs. 6 and 7, showing the user in a second position.
FIG. 9 is a schematic diagram depicting the user and communication network antennas of FIGs. 6 - 8, showing an approximated location of the user.
FIG. 10 is a schematic diagram depicting the user and communication network antennas of FIGs.6 - 9, showing the user in a third position.
FIG. 11 is a schematic diagram depicting the user and communication network antennas of FIGs. 6 - 10, showing another approximated location of the user.
FIG. 12 is a schematic diagram depicting the user and communication network antennas of FIGs. 6 - 11, showing the user in a fourth position.
FIG. 13 is a schematic diagram depicting the user and communication network antennas of FIGs. 6 - 12, showing another approximated location of the user.
FIG. 14 is a schematic diagram depicting the user and communication network antennas of FIGs. 6 - 13, showing the computed course line of the user.
FIG. 15 is flowchart depicting functionality of an embodiment of a location based service system.
FIG. 16 is flowchart depicting functionality of another embodiment of a location-based service system.
FIG. 17 is a schematic diagram of a user interface displaying a representative message that can be provided by an embodiment of a location-based service system.

As will be described in greater detail here, systems and methods enable the location of a user to be approximated. In some embodiments, the future location of a user also is approximated so that location-based service providers are able to provide information to the user based on the approximated future location.

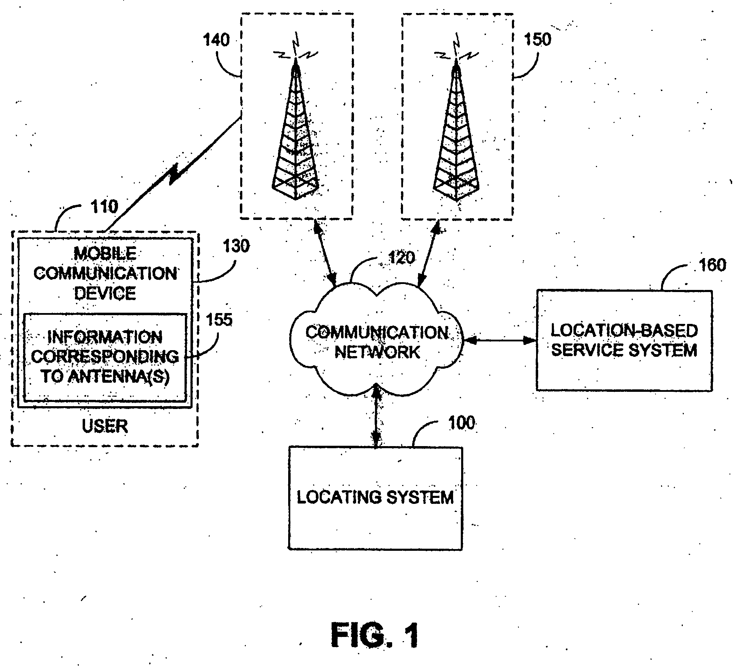

Referring now to the drawings, FIG. 1 is a schematic diagram depicting an embodiment of a system 10. As shown in FIG. 1, system 10 includes a locating system 100 that communicates with a user 110 via a communication network 120. More specifically, the user communicates with the locating system 100 via a mobile communication device 130, which transmits signals to and/or receives signals from one or more antennas 140, 150 associated with the network 120.

As used herein, a mobile communication device is any transportable device capable of transmitting and/or receiving voice and/or text data, such as a personal digital assistant (PDA), phone, laptop computer, or automotive computer. Note, communication network 120 may be any type of communication network employing any network topology, transmission medium, or network protocol. For example, such a network may be any public or private packet-switched or other data network, including the Internet, circuit-switched networks, such as the public switched telephone network (PSTN), wireless network, or any other desired communications infrastructure and/or combination of infrastructures.

In FIG. 1, mobile communication device 130 is currently communicating with the network 120 via antenna 140. Typically, use of antenna 140 is based on the proximity of the mobile communication device 130 to that antenna. Thus, if the mobile communication device moves closer to antenna 150, communication between the mobile communication device 130 and the network 120 may be facilitated by antenna 150.

Typically, the antennas 140, 150 provide identification information to the mobile communication device 130 that can be used to determine the locations of the respective antennas or the location of the mobile communication device 130 directly. The information provided by the antenna(s), *e.g.* information 155, then can be used to approximate current and, in some embodiments, a future location of the user.

Various other systems/components communicate with the communication network 120 and, thus, with the user 110. For instance, a location-based service system 160 communicates with the communication network. Functionality of location-based service system 160 will be described in detail later.

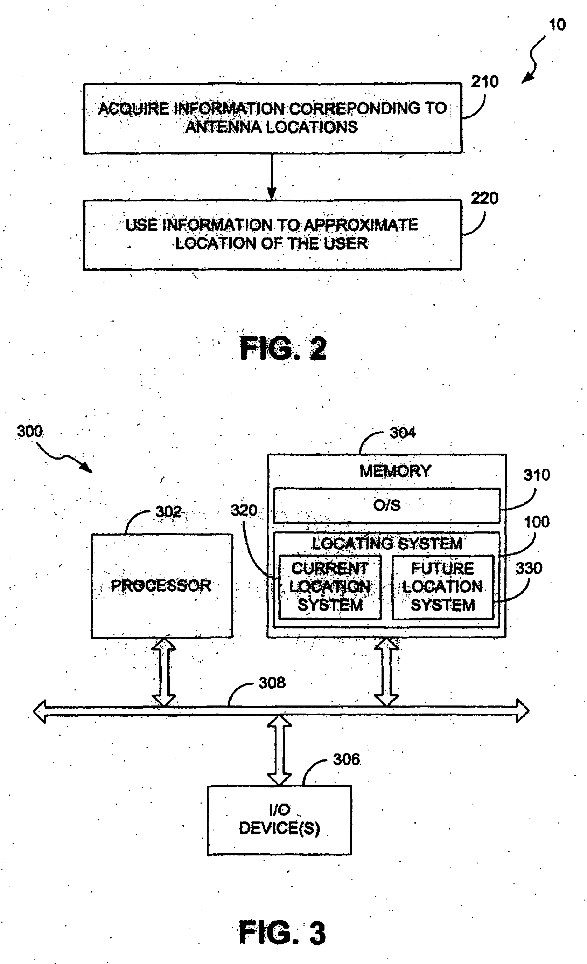

Functionality of system 10 of FIG. 1 is shown in the flowchart of FIG. 2. As shown in FIG. 2, the functionality (or method) may be construed as beginning at block 210, where information corresponding to antenna locations, *e.g.*, locations corresponding to cell or wireless packet network antennas is acquired. This can include information corresponding to locations of antennas that the user has used to communicate. Additionally, since antenna selection typically is based upon signal strength between an antenna and the mobile communication device of the user, even if the user has not used a particular antenna for communicating with another user, for example, information about the location of the antenna could still be acquired. In block 220, the information acquired is used to approximate a location of the user. In some embodiments, this can include an approximated future location of the user as will be described later.

Locating systems 100 can be implemented in software, firmware, hardware, or a combination thereof. When implemented in hardware, locating system 100 can be implemented with any or a combination of various technologies. By way of example, the following technologies, which are each well known in the art, can be used: a discrete logic circuit(s) having logic gates for implementing logic functions upon data signals, an application specific integrated circuit(s) (ASIC) having appropriate combinational logic gates, a programmable gate array(s) (PGA), and a field programmable gate array(s) (FPGA).

When implemented in software, locating system 100 can be a program that is executable by a digital computer, an example of which is depicted schematically in FIG. 3. In FIG. 3, computer 300 includes a processor 302, memory 304, and one or more input and/or output (I/O) devices 306 (or peripherals) that are communicatively coupled via a local interface 308. Processor 302 can be a hardware device configured to execute software that can be stored in memory 304. Memory 304 can include any combination of volatile memory elements and/or nonvolatile memory elements. Moreover, memory 304 can incorporate electronic, magnetic, optical, and/or other types of storage media. Note that memory 304 can have a distributed architecture, where various components are situated remote from one another, but can be accessed by processor 302.

The software in memory 304 can include one or more separate programs, each of which comprises an ordered listing of executable instructions for implementing logical functions. The software in the memory 304 includes locating system 100 and a suitable operating system (O/S) 310. The operating system 310 controls the execution of other computer programs, such as locating system 100. Note, the locating system depicted in FIG. 3 includes two subsystems: a current location system 320 and a future location system 330, each of which will be described later.

The I/O device(s) 306 can include input devices such as a keypad and/or a clock, for example. I/O device(s) 306 also can include output devices such as a display device or speaker, for example. I/O device(s) 306 may further include devices that are configured to communicate both inputs and outputs such as a communication interface.

When locating system 100 is implemented in software, it should be noted that the locating system 100 can be stored on any computer-readable medium for use by or in connection with any computer-related system or method. In the context of this document, a computer-readable medium is an electronic, magnetic, optical, or other physical device or means that can contain or store a computer program for use by or in connection with a computer-related system or method. Locating system 100 can be embodied in any computer-readable medium for use by or in connection with an instruction execution system, apparatus, or device, such as a computer-based system, processor-containing system, or other system that can fetch the instructions from the instruction execution system, apparatus, or device and execute the instructions.

As used herein, a "computer-readable medium" can be any means that can store, communicate, propagate or transport a program for use by or in connection with an instruction execution system, apparatus, or device. Thus, a computer readable medium can be, for example but not limited to, an electronic, magnetic, optical, electromagnetic, infrared, or semiconductor system, apparatus, device, or propagation medium. More specific examples (a nonexhaustive list) of a computer-readable medium include the following: an electrical connection (electronic) having one or more wires, a portable computer diskette (magnetic), a random access memory (RAM) (electronic), a read-only memory (ROM) (electronic), an erasable programmable read-only memory (EPROM, EEPROM, or Flash memory) (electronic), an optical fiber (optical), and a portable compact disc read-only memory (CDROM) (optical). Note that the computer-readable medium could even be paper or another suitable medium upon which the program is printed, as the program could be electronically captured, via optical scanning of the paper or other medium, then compiled, interpreted or otherwise processed in a suitable manner, if necessary, and then stored in a computer memory.

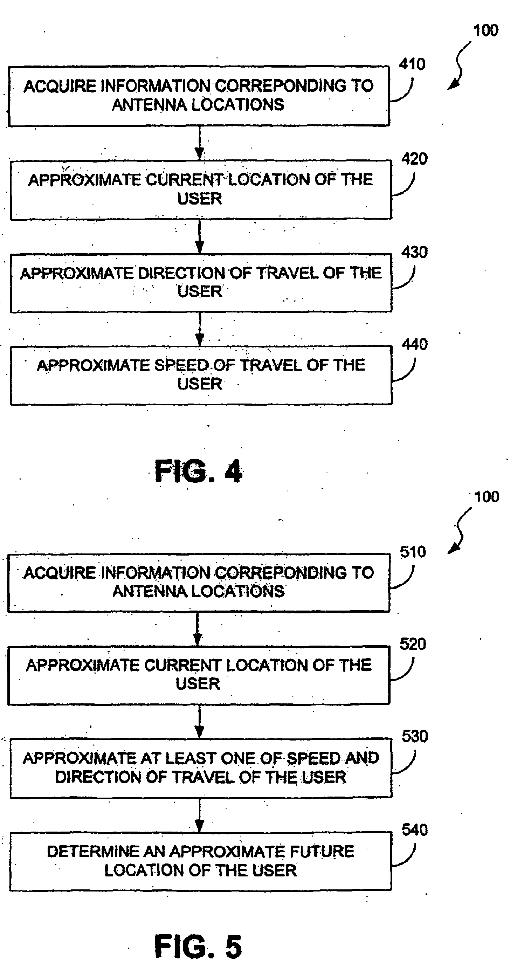

Reference will now be made to the flowchart of FIG. 4, which depicts the functionality of an embodiment of locating system 100. In this regard, each block of the flowchart represents a module segment or portion of code that comprises one or more executable instructions for implementing the specified logical function(s). It should also be noted that in some alternative implementations the functions noted in various blocks of FIG. 4, or any other of the accompanying flowcharts, may occur out of the order in which they are depicted. For example, two blocks shown in succession in FIG. 4 may, in fact, be executed substantially concurrently. In other embodiments, the blocks may sometimes be executed in the reverse order depending upon the functionality involved.

As shown in FIG. 4, the functionality (or method) of an embodiment of a locating system 100 may be construed as beginning at block 410, where information corresponding to the locations of antennas associated with a user is acquired. For instance, identification information from an antenna can be acquired and then the corresponding location can be determined by referring to a look-up table. The information corresponding to the antenna locations then can be used to approximate a current location of the user (block 420). In block 430, a direction of travel of the user is approximated. In block 440, a speed of travel of the user is approximated.

Typically, the functionality associated with block 410 is attributed to an embodiment of a current location system 320 (FIG. 3). In particular, embodiments of the current location system 320 can acquire information corresponding to the antenna with which a mobile communication device of the user has established the highest signal strength. This information can be acquired at various time intervals, with the information then being stored in memory. Preferably, the information corresponding to a particular antenna location can be associated with a time of acquisition. This enables embodiments of the future location system 330 (FIG. 3) to use the location information and time information to determine an approximate speed of travel of the user.

As shown in FIG. 5, the functionality (or method) of another embodiment of a locating system 100 may be construed as beginning at block 510, where information corresponding to the locations of one or more antennas associated with a user is acquired. In block 520, the information is analyzed to determine a current location of the user. In block 530, at least one of speed and direction of travel of the user is approximated. Note, various assumptions about the speed and/or direction of travel of the user can be used to refine the approximated speed and/or direction of travel. For instance, if the approximated speed indicates that the user is traveling by vehicle, and the approximated direction of travel corresponds to a rural interstate highway, the approximated direction of travel of the user may be refined by assuming that the user is traveling upon the interstate. Thus, the direction of travel of the user is "snapped" to the interstate.

In block 540, an approximate future location of the user is determined. Note, this can include a time component, *i.e.,* an estimated time of arrival at the approximate future location can be determined. In some embodiments, information corresponding to the approximate future location can be provided to a location-based service provider so that location-based information can be provided to the user.

Note that various types and formats of information can be provided to a location-based service provider. For example, in some embodiments, raw data corresponding to antenna locations can be provided. If this information is provided real-time, the location-based service provider can make various determinations as to speed and direction of travel of the user. In other embodiments, more refined data can be provided. In particular, one or more of the following could be provided: the current direction of travel of the user, the current speed of travel of the user, and the estimated arrival time of the user at a designated location.

Although depicted in FIG. 1 as residing outside the mobile communication device of a user, embodiments of the locating system 100 and functionality associated therewith can be resident in the mobile communication device. In such an embodiment, the mobile communication device may be able to determine at least one of an approximated current location of the user, an approximate direction of travel of the user, an approximate speed of travel of the user, an approximated future location of the user and an estimated time of arrival at the approximated future location. This information then can be provided to a location-based service system, which could use the information for directing location-based information back to the user via the mobile communication device.

In some embodiments, a location-based service system may permit a user to identify one or more services about which the user is interested in receiving information. In such an embodiment, when an approximated future location of the user is within a predetermined distance from a location that offers the relevant service, the location-based service provider can provide the user with information corresponding to that service via the user's mobile communication device. Thus, information, *e.g.*, advertisements, can be "pushed" to the user.

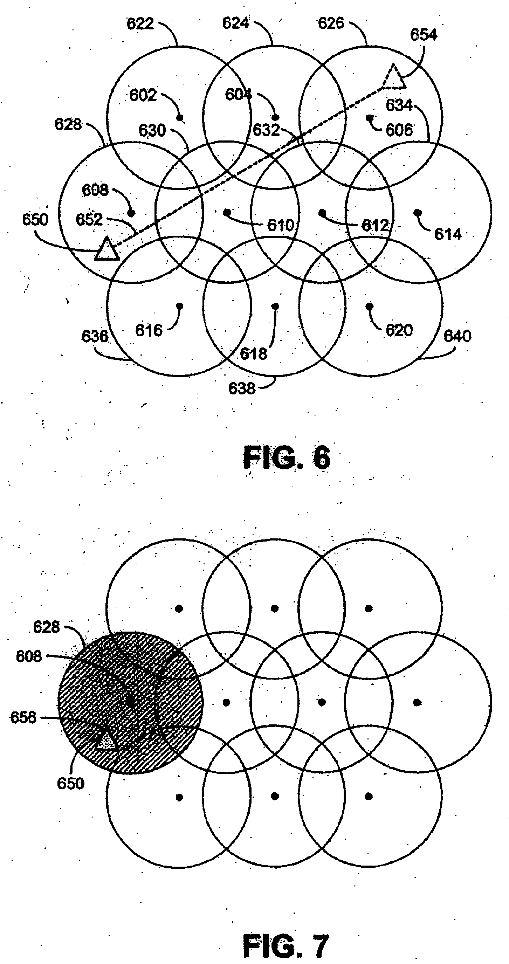

FIGs. 6 - 13 depict a representative array of communication antennas, *i.e*., antennas 602, 604, 606, 608, 610, 612, 614, 616, 618 and 620, and corresponding coverage areas, *i.e.*, coverage areas 622, 624, 626, 628, 630, 632, 634, 636, 638 and 640. An embodiment of a locating system will be described as the locating system determines approximated locations for a user traveling along an intended path that traverses several of the coverage areas.

As shown in FIG. 6, user 650 intends to travel along a path 652 until arriving at an intended destination 654. During travel along the path 652, the user crosses through the coverage areas of multiple antennas. Embodiments of the locating system use information corresponding to these antennas to determine an approximated current location and/or approximated future locations of the user.

Turning now to FIG. 7, user 650 is depicted in a first position 656 that is located within the coverage area 628 of antenna 608. Because the locating system receives information that the user; *i.e.*, a mobile communication device of the user, corresponds to antenna 608, the locating system can determine that the user is somewhere within the known coverage area of antenna 608. The known coverage area and, thus, the approximated current location of the user is depicted by the cross-hatched lines.

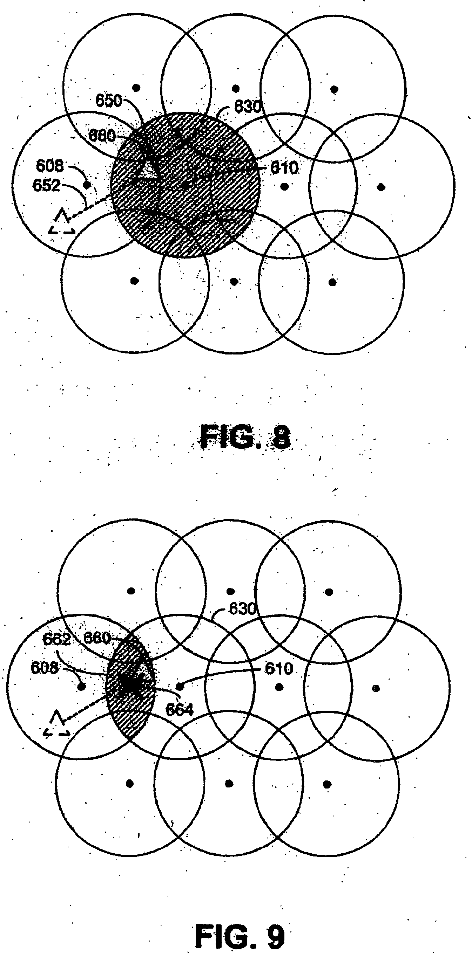

As shown in FIG. 8, as the user proceeds along the intended path 652 to position 660, the mobile communication device of the user is handed-off from antenna 608 to antenna 610. Typically, such a handoff occurs when the received signal strength indicator (RSSI) at antenna 608 indicates that a handoff should be accomplished.

Once the mobile communication device of the user is handed-off to antenna 610, the locating system can determine that the user is somewhere within the known coverage area 630 of antenna 610. The approximated current location of the user is now depicted by the cross-hatched lines of FIG. 8.

Referring to FIG. 9, since it is known that the mobile communication device of the user has moved from the coverage area 628 of antenna 608 to the coverage area 630 of antenna 610, the locating system can determine that the user is somewhere within the overlapping coverage area 662 formed between antenna 608 and 610. This overlapping coverage area 662 is depicted by the cross-hatched lines in FIG. 9. In the embodiment depicted, in order to simplify the calculation of the approximate current location of the user, a geometric center of the overlapping coverage area 662, which is indicated by "X" 664, can be assumed to be the user's current location.

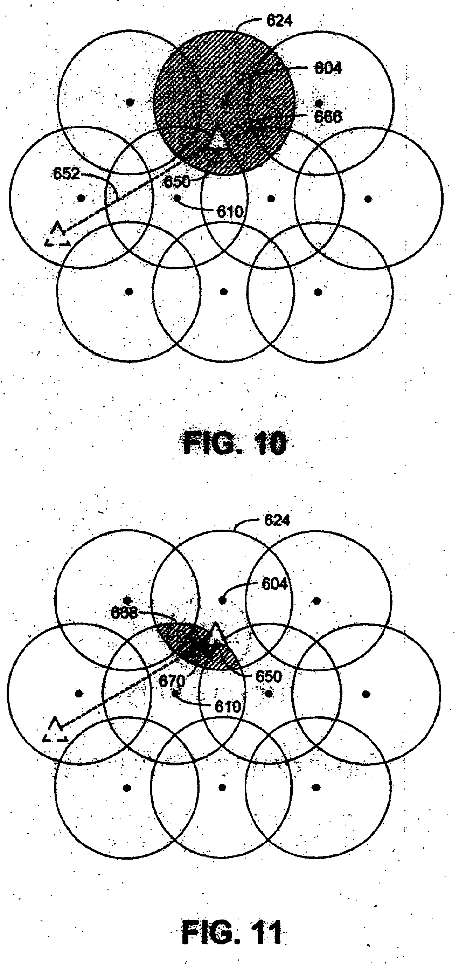

In FIG. 10, user 650 is depicted in a third position 666 that is located within the coverage area 624 of antenna 604. As mentioned before, this can be determined based upon the mobile communication device of the user communicating with antenna 604. Therefore, a hand-off has occurred between antennas 610 and 604. As before, the locating system can determine that the user is somewhere within the overlap region 668 (FIG. 11) that is formed between antennas 610 and 604. Also as before, some embodiments of the locating system may assume that the user is located at a geographic center 670 of the overlap region 668.

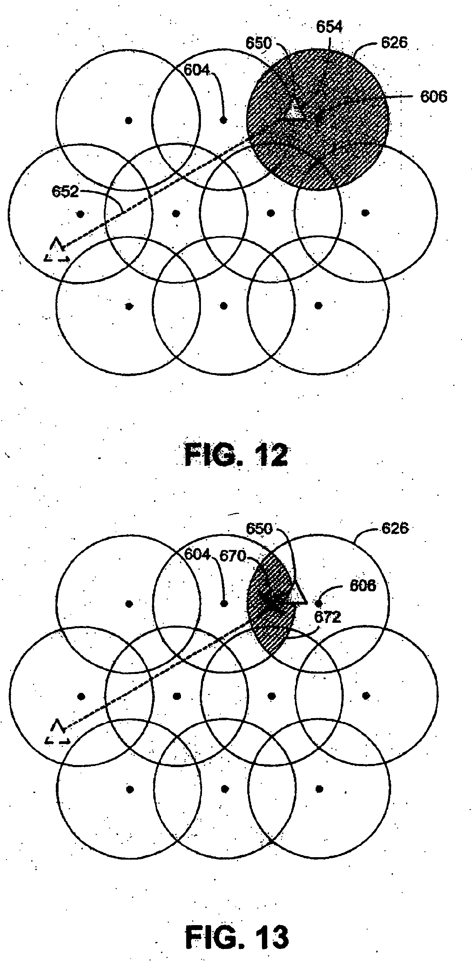

As depicted in FIG. 12, the user has advanced along the intended path 652 to the intended destination 654, which is located within the known coverage area 626 of antenna 606. This can be determined due to a hand-off that occurs between antenna 604 and 606. As shown in FIG. 13, some embodiments of the locating system may assume that the user is located at a geographic center 672 of the overlap region 674 of antennas 604 and 606 once such a hand-off occurs.

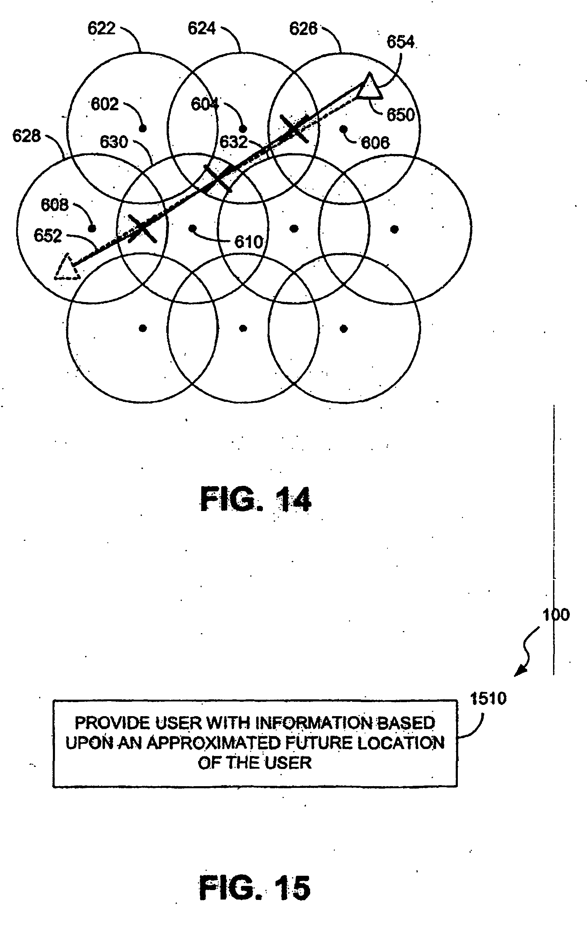

As shown in FIG. 14, embodiments of the locating system can use information about the location of a user to develop a computed course line 680 (the solid line interconnecting the "x"s) for the user. Since this computed course line 680 typically only is an approximation of the actual path 652 traversed by the user, various techniques can be used for refining the computed course line. As mentioned before, these techniques can include snapping the computed course line to a known roadway or using one or more of various other position-refinement techniques, such as GPS, triangulation, time-of-arrival difference, angle of arrival and RF fingerprinting, for example. Additionally or alternatively, refinements using signal strength correlations from multiple antennas or other known and/or yet to be developed techniques could be used. Also note that information associated with the time that a user is determined to be at a particular location can be used to determine an approximated speed of travel of the user. Once the speed has been approximated, future locations of users can be determined with or without estimated arrival times.

As mentioned before, locating systems can be used to provide a user with information that is customized based, at least in part, upon the user's current location or future location. The embodiment of location-based service system 160 of FIG. 1 is an example of such a system. Functionality of the embodiment of location-based service system 160 will now be described with reference to the flowchart of FIG. 15.

As shown in FIG. 15, the functionality (or method) of an embodiment of location-based service system 160 is depicted in block 1510, where information is provided to a user based upon an approximated future location, either directly or indirectly, of the user. Typically, the approximated future location is determined by using a mobile communication device of the user.

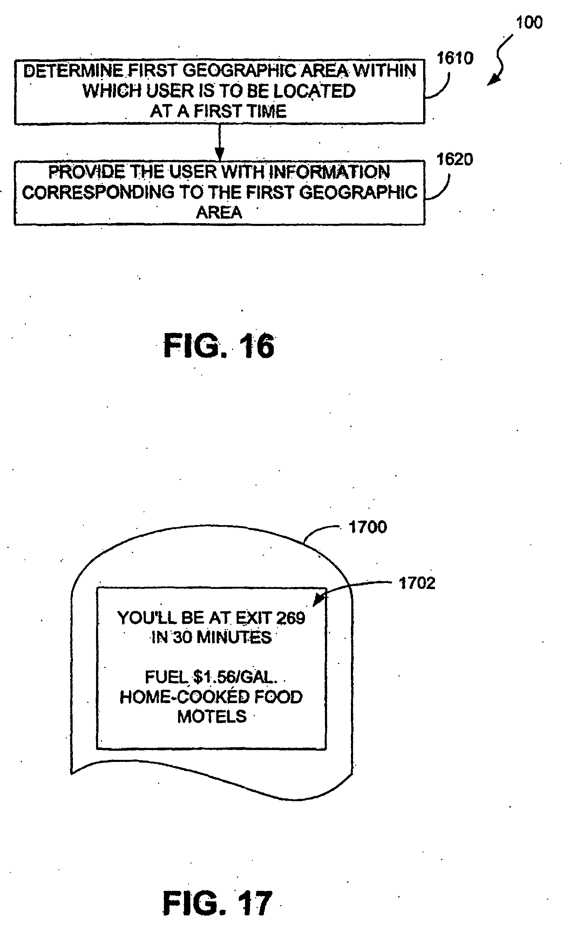

As shown in FIG. 16, functionality of another embodiment of a location-based service system 160 (or method) may be construed as beginning at block 1610, where a first geographic area within which a user is expected to be located at a first time is determined. In block 1620, first information is provided to the user that corresponds to the first geographic area.

FIG. 17 schematically depicts a portion of a representative mobile communication device 1700. Specifically, a location-based service provider has used information corresponding to an approximate future location of a user of mobile communication device 1700 to determine that the user may be arriving soon at a particular location. In this example, it has been determined that the user will arrive at Exit 269 in 30 minutes. Based upon this information, the location-based service provider sends information 1602 to the mobile communication device 1700 that is relevant to the area in the vicinity of Exit 269. Clearly, the information provided to the user can be selected based upon various criteria, such as known user preferences, *e*.*g.*, preferences for particular products and/or services.

It should be emphasized that the above-described embodiments are merely possible examples of implementations. Many variations and modifications may be made to the above-described embodiments. All such modifications and variations are intended to be included herein within the scope of this disclosure and covered by the following claims.

## Claims

1. A method of providing location-based services to a user comprising:
acquiring information corresponding to antenna locations associated with a user;
using the information acquired to approximate a future location of the user; and
providing information to the user based upon the approximated future location of the user and on an estimated time of arrival of the user at the approximated future location, the information provided being based, at least in part, on known user preferences.

2. A method as in claim 1, wherein acquiring information corresponding to antenna locations includes acquiring information corresponding to at least one of:
antennas (140, 150) with which a mobile communication device (110) associated with the user communicated and an antenna with which the mobile communication device currently communicates.

3. A method as in claim 1, wherein acquiring information corresponding to antenna locations includes acquiring information corresponding to cell base stations with which a cell phone associated with the user has communicated.

4. A method as in any preceding claim, wherein using the information includes analyzing the information corresponding to antenna locations to determine an approximate direction of travel of the user.

5. A method as in any preceding claim, wherein using the information includes analyzing the information corresponding to antenna locations to determine an approximate speed of travel of the user.

6. A method as in any preceding claim, wherein the known user preferences are selected from preferred product and preferred services of the user.

7. A method as in claim 6, wherein information corresponding to the preferred products and the preferred services is stored at a location remote from the user.

8. A system for providing location-based services to a user including:
a locating system (100) operable to acquire information corresponding to antenna locations associated with a user to use the information acquired to approximate a future location of the user; and
a located-based service system (160) operable to provide information to the user based upon the approximated future location of the user and an estimated time of arrival at the approximated future location, the information provided being based, at least in part, on known user preferences.

9. The system of claim 8, wherein the locating system is operable to acquire information corresponding to at least one of: antennas with which a mobile communication device associated with the user communicated and an antenna with which the mobile communication device currently communicates.

10. The system of claim 8 or 9 including a mobile communication device; and wherein the locating system is resident in the mobile communication device.

11. A system as in any one of claims 8 to 10, wherein the known user preferences are selected from preferred product and preferred services of the user.

12. A system as in claim 11, wherein information corresponding to the preferred products and the preferred services is stored at a location remote from the user.

## Revendications

1. Procédé de fourniture de services basés sur la localisation à un utilisateur comprenant :
l'acquisition d'une information correspondant à des emplacements d'antennes associés à un utilisateur ;
l'utilisation de l'information acquise pour approximer une localisation future de l'utilisateur ; et
la fourniture d'une information à l'utilisateur basée sur la localisation future approximée de l'utilisateur et sur un temps d'arrivée estimé de l'utilisateur au niveau de la localisation future approximée, l'information fournie étant basée, au moins en partie, sur des préférences d'utilisateur connues.

2. Procédé selon la revendication 1, dans lequel l'acquisition d'une information correspondant à des emplacements d'antennes comprend l'acquisition d'une information correspondant à au moins une entre :
des antennes (140, 150) avec lesquelles un dispositif de communication mobile (110) associé à l'utilisateur a communiqué et une antenne avec laquelle le dispositif de communication mobile communique actuellement.

3. Procédé selon la revendication 1, dans lequel l'acquisition d'une information correspondant à des emplacements d'antennes comprend l'acquisition d'une information correspondant à des stations de base cellulaires avec lesquelles un téléphone cellulaire associé à l'utilisateur a communiqué.

4. Procédé selon l'une quelconque des revendications précédentes, dans lequel l'utilisation de l'information comprend l'analyse de l'information correspondant à des emplacements d'antennes pour déterminer une direction de déplacement approximative de l'utilisateur.

5. Procédé selon l'une quelconque des revendications précédentes, dans lequel l'utilisation de l'information comprend l'analyse de l'information correspondant à des emplacements d'antennes pour déterminer une vitesse de déplacement approximative de l'utilisateur.

6. Procédé selon l'une quelconque des revendications précédentes, dans lequel les préférences d'utilisateur connues sont sélectionnées à partir des produits préférés et des services préférés de l'utilisateur.

7. Procédé selon la revendication 6, dans lequel l'information correspondant aux produits préférés et aux services préférés est stockée au niveau d'un emplacement éloigné de l'utilisateur.

8. Système pour fournir des services basés sur la localisation à un utilisateur comprenant :
un système de localisation (100) exploitable pour acquérir une information correspondant à des emplacements d'antennes associés à un utilisateur pour utiliser l'information acquise pour approximer une localisation future de l'utilisateur ; et
un système de services basés sur la localisation (160) exploitable pour fournir une information à l'utilisateur basée sur la localisation future approximée de l'utilisateur et un temps d'arrivée estimé au niveau de la localisation future approchée, l'information fournie étant basée, au moins en partie, sur des préférences d'utilisateur connues.

9. Système selon la revendication 8, dans lequel le système de localisation est exploitable pour acquérir une information correspondant à au moins une entre : des antennes avec lesquelles un dispositif de communication mobile associé à l'utilisateur a communiqué et une antenne avec laquelle le dispositif de communication mobile communique actuellement.

10. Système selon la revendication 8 ou 9 comprenant un dispositif de communication mobile ; et dans lequel le système de localisation est résident dans le dispositif de communication mobile.

11. Système selon l'une quelconque des revendications 8 à 10, dans lequel les préférences d'utilisateur connues sont sélectionnées à partir des produits préférés et des services préférés de l'utilisateur.

12. Système selon la revendication 11, dans lequel l'information correspondant aux produits préférés et aux services préférés est stockée au niveau d'un emplacement éloigné de l'utilisateur.

## Patentansprüche

1. Ein Verfahren zum Liefern von standortbasierten Diensten an einen Benutzer, das folgende Schritte aufweist:
Erfassen von Informationen, die Antennenstandorten entsprechen, die einem Benutzer zugeordnet sind;
Verwenden der erfassten Informationen, um einen zukünftigen Standort des Benutzers näherungsweise zu bestimmen; und
Liefern von Informationen an den Benutzer basierend auf dem näherungsweise bestimmten zukünftigen Standort des Benutzers und auf einer geschätzten Ankunftszeit des Benutzers an dem näherungsweise bestimmten zukünftigen Standort, wobei die gelieferten Informationen zumindest teilweise auf bekannten Benutzervorlieben basieren.

2. Ein Verfahren gemäß Anspruch 1, bei dem das Erfassen von Informationen, die Antennenstandorten entsprechen, ein Erfassen von Informationen umfasst, die zumindest einem der Folgenden entsprechen:
Antennen (140, 150), mit denen eine Mobilkommunikationsvorrichtung (110), die dem Benutzer zugeordnet ist, kommuniziert hat, und eine Antenne, mit der die Mobilkommunikationsvorrichtung derzeit kommuniziert.

3. Ein Verfahren gemäß Anspruch 1, bei dem das Erfassen von Informationen, die Antennenstandorten entsprechen, ein Erfassen von Informationen umfasst, die Zellbasisstationen entsprechen, mit denen ein Mobiltelefon, das dem Benutzer zugeordnet ist, kommuniziert hat.

4. Ein Verfahren gemäß einem der vorhergehenden Ansprüche, bei dem das Verwenden der Informationen ein Analysieren der Informationen, die Antennenstandorten entsprechen, umfasst, um eine näherungsweise Bewegungsrichtung des Benutzers zu bestimmen.

5. Ein Verfahren gemäß einem der vorhergehenden Ansprüche, bei dem das Verwenden der Informationen ein Analysieren der Informationen, die Antennenstandorten entsprechen, umfasst, um eine näherungsweise Bewegungsgeschwindigkeit des Benutzers zu bestimmen.

6. Ein Verfahren gemäß einem der vorhergehenden Ansprüche, bei dem die bekannten Benutzervorlieben aus bevorzugtem Produkt und bevorzugten Diensten des Benutzers ausgewählt sind.

7. Ein Verfahren gemäß Anspruch 6, bei dem Informationen, die den bevorzugten Produkten und den bevorzugten Diensten entsprechen, an einem von dem Benutzer entfernten Ort gespeichert werden.

8. Ein System zum Liefern von standortbasierten Diensten an einen Benutzer, das folgende Merkmale umfasst:
ein Lokalisiersystem (100), das wirksam ist, um Informationen zu erfassen, die Antennenstandorten entsprechen, die einem Benutzer zugeordnet sind, um die erfassten Informationen zu verwenden, um einen zukünftigen Standort des Benutzers näherungsweise zu bestimmen; und
ein System standortbasierter Dienste (160), das wirksam ist, um dem Benutzer basierend auf dem näherungsweise bestimmten zukünftigen Standort des Benutzers und einer geschätzten Ankunftszeit an dem näherungsweise bestimmten zukünftigen Standort Informationen zu liefern, wobei die gelieferten Informationen zumindest teilweise auf bekannten Benutzervorlieben basieren.

9. Das System gemäß Anspruch 8, bei dem das Lokalisiersystem wirksam ist, um Informationen zu erfassen, die zumindest einem der Folgenden entsprechen: Antennen, mit denen eine Mobilkommunikationsvorrichtung, die dem Benutzer zugeordnet ist, kommuniziert hat, und eine Antenne, mit der die Mobilkommunikationsvorrichtung derzeit kommuniziert.

10. Das System gemäß Anspruch 8 oder 9, das eine Mobilkommunikationsvorrichtung umfasst; und bei dem das Lokalisiersystem in der Mobilkommunikationsvorrichtung resident ist.

11. Ein System gemäß einem der Ansprüche 8 bis 10, bei dem die bekannten Benutzervorlieben aus bevorzugtem Produkt und bevorzugten Diensten des Benutzers ausgewählt sind.

12. Ein System gemäß Anspruch 11, bei dem Informationen, die den bevorzugten Produkten und den bevorzugten Diensten entsprechen, an einem von dem Benutzer entfernten Ort gespeichert werden.
